# EUROPÄISCHE PATENTSCHRIFT

(11) **EP 0 767 284 B1**
(45) Veröffentlichungstag und Bekanntmachung des Hinweises auf die Patenterteilung: **28.07.1999**
(21) Anmeldenummer: 95115824.5
(22) Anmeldetag: 07.10.1995
(51) Int. Cl.: E04D 12/00, D06N 5/00, B32B 11/04

(54) **Diffusionsoffene Schalungs- und Unterspannbahn**
Vapor permeable substrate and underroof membrane
Membrane et support de sous-toiture perméable à la vapeur

(43) Veröffentlichungstag der Anmeldung: 09.04.1997
(73) Patentinhaber: Paul Bauder GmbH & Co., D-70499 Stuttgart (DE)
(72) Erfinder: Bauder, Gerhard, D-70499 Stuttgart (DE)
(74) Vertreter: Hoeger, Stellrecht & Partner

(56) Entgegenhaltungen:
- EP-A- 0 027 750
- EP-A- 0 169 308
- DE-A- 3 425 795
- DE-A- 4 322 745
- DE-A- 4 322 747
- DE-U- 8 524 162
- DE-U- 8 601 670
- DE-U- 9 407 291
- FR-A- 2 556 392
- GB-A- 2 193 153

## Beschreibung

Die Erfindung betrifft eine diffusionsoffene Schalungs- und Unterspannbahn mit einer weitgehend wasserdichten, diffusionsoffenen Kunststoffolie aus hydrophilem Kunststoff.

Unter "diffusionsoffen" ist hier generell wasserdampfdurchlässig und wasserdicht zu verstehen, wobei die Kunststoffolie aufgrund ihres hydrophilen Charakters vereinzelte Wassermoleküle aufnehmen und hindurchdiffundieren lassen kann. Für Wasser in flüssiger Form ist die Folie jedoch weitgehend undurchlässig. Derartige Folien sind nicht als mikroporöse Membranen ausgebildet, sondern sind aufgrund ihrer chemischen Struktur in beschränktem Maß für Wasser durchlässig.

Diffusionsoffene Schalungs- und Unterspannbahnen werden gerade bei Dächern oder auch bei Fassaden eingesetzt. Hierbei ist eine hohe Wasserdampfdurchlässigkeit wünschenswert, um beispielsweise ein Austrocknen darunterliegender Holzkonstruktionen zu ermöglichen und eine Tauwasserbildung zu vermeiden.

Eine Unterspannbahn mit den eingangs genannten Merkmalen ist aus der DE 35 38 597 C2 bekannt. Diese Unterspannbahn besteht aus einer Weichschaumschicht, die von einem Gittergewebe und einer sich anschließenden Abdeckfolie überdeckt ist. Die Folie besteht aus Polyurethan und ist aufgrund der hydrophilen Eigenschaften des Polyurethans diffusionsoffen.

Weiter ist eine derartige Unterspannbahn für Dächer aus der DE 34 25 795 A1 bekannt, die durch eine diffusionsoffene Folie aus Polyether-Block-Amiden gebildet ist. Auch dieser Kunststoff ist hydrophil und verleiht dadurch der Folie die erforderliche Diffusionsoffenheit.

Bei diesen bekannten Bahnen ist nachteilig, daß die an der ihrer Außenseite nicht abgedeckten, diffusionsoffenen Kunststoffolien sehr empfindlich gegen mechanische Einwirkungen, wie sie gerade während der Bauphase auftreten, und gegen UV-Bestrahlung sind.

In der DE-U-86 01 670 ist eine Unterspannbahn beschrieben, welche einen Verbundstoff aus einer dampfdurchlässigen Folie und einem Vlies beschreibt, Folie und Vlies sind durch Vernadeln miteinander verbunden, so daß dieser Verbundstoff an sich wasserdurchlässig wird. Um die Wasserdurchlässigkeit trotzdem zu beseitigen, werden Folie und Vlies über eine Kleberschicht zusätzlich miteinander verbunden, der erhaltene Verbundstoff kann außerdem mit Bitumen beschichtet werden. Durch die Mehrlagigkeit ergibt sich ein relativ komplizierter Aufbau, außerdem sinkt die Wasserdampfdurchlässigkeit durch diese Mehrlagigkeit.

Weiterhin ist es aus der EP 027 750 B1 bekannt, eine Schalungs- und Unterspannbahn zu bilden, indem eine vliesartige Unterlage mit einer bitumenhaltigen Tränkmasse beschichtet wird. Die Beschichtung reißt beim Abkühlen auf und bildet kleine Öffnungen, durch die Wasserdampf diffundieren kann, während Wasser durch diese Öffnungen nicht eindringen kann. Um diesen Effekt zu erreichen, wird eine Bitumenmenge in der Größenordnung von 250 bis 300 g/m² aufgetragen.

Mit einem solchen Aufbau ist es möglich, eine relativ robuste Schalungs- und Unterspannbahn mit einer Wasserdampfdurchlässigkeit herzustellen, die einer diffusionsäquivalenten Luftschichtdicke s_{d} zwischen 10 m und 200 m entspricht; es wären aber wesentlich niedrigere Werte wünschenswert. Bei Verwendung von weniger Bitumen wird diese Bahn jedoch undicht.

Der Erfindung liegt die Aufgabe zugrunde, eine eingangs genannte Schalungs- und Unterspannbahn zu schaffen, die bei hoher Wasserdichtigkeit eine hohe Wasserdampfdurchlässigkeit aufweist und weitgehend unempfindlich gegen UV-Bestrahlung und mechanische Belastungen ist.

Diese Aufgabe wird für eine diffusionsoffene Schalungs- und Unterspannbahn mit einer weitgehend wasserdichten, diffusionsoffenen Kunststoffolie aus hydrophilem Kunststoff erfindungsgemäß dadurch gelöst, daß die Kunststoffolie auf einer Seite mit Bitumen in einer Menge von 15 bis 70 g/m² beschichtet ist.

Bei diesen Kunststoffolien, die vorzugsweise aus Polyether-Block-Amid, Polyether-Block-Ester oder Polyurethan hergestellt sind, handelt es sich um wasserdampfdurchlässige, jedoch weitgehend wasserdichte Folien, die vorzugsweise eine Dicke von nur 10 bis 40 µm und eine Wasserdampfdurchlässigkeit, die einer diffusionsäquivalenten Luftschichtdicke s_{d} von weniger als 0,3 m entspricht, aufweisen.

Zum Schutz der Kunststoffolie wird die vorgeschlagene Schalungs- und Unterspannbahn so verlegt, daß die Bitumenbeschichtung auf der gefährdeten Seite zu liegen kommt, also üblicherweise auf der einem Gebäude oder Bauwerk abgewandten Seite angeordnet ist, die auch als Außenseite bezeichnet wird.

Die Bitumenbeschichtung vermindert aufgrund der vorgesehenen geringen Menge pro Fläche die Wasserdampfdurchlässigkeit der Kunststoffolie nicht merklich, so daß eine Schalungs- und Unterspannbahn mit einer hervorragenden Wasserdampfdurchlässigkeit erhalten wird.

Bei der vorgeschlagenen Kombination einer diffusionsoffenen Folie aus hydrophilem Kunststoff mit der Bitumenbeschichtung hat sich zudem überraschenderweise gezeigt, daß die hohe Wasserdampfdurchlässigkeit der Schalungs- und Unterspannbahn dauerhaft erhalten bleibt, obwohl das Bitumen über längere Zeiträume hinweg leicht flüchtige, ölartige Bestandteile abgibt, die in andere diffusionsoffene Folien, wie Polyethylen- oder Polypropylen-Folien, so stark eindiffundieren, daß die Wasserdampfdurchlässigkeit wesentlich beeinträchtigt wird.

Eine Erklärung für dieses Verhalten liegt wahrscheinlich darin, daß die hydrophilen Folien aufgrund ihrer chemischen Struktur, nämlich ihres polaren Charakters, die im wesentlichen unpolaren ölartigen Bestandteile des Bitumens nicht oder zumindest nur sehr schlecht aufnehmen können.

Ein weiterer wesentlicher Vorteil der vorgeschlagenen Lösung liegt darin, daß gerade die einseitige Bitumenbeschichtung zu einer hydrophoben Ausrüstung der an sich hydrophilen Kunststoffolie und hierdurch zur Ausbildung einer im wesentlichen nur in einer Richtung, nämlich von der unbeschichteten Seite zur beschichteten hin, wasserdampfdurchlässigen Schalungs- und Unterspannbahn führt. Das beim Verlegen der Bahn außenseitig anzuordnende Bitumen verhindert durch seinen hydrophoben Charakter nachhaltig das Eindringen von Wasser, hingegen wird die von innen nach außen verlaufende Diffusion nicht merklich beeinträchtigt.

Jedoch ist es auch möglich, die Kunststoffolie zumindest partiell beidseitig mit Bitumen zu beschichten, um beispielsweise eine teilweise rückseitige Verklebung der Schalungs- und Unterspannbahn zu erleichtern. In Spezialfällen kann die einseitig mit Bitumen beschichtete Folie auch so verlegt werden, daß die einseitige Bitumenbeschichtung rückseitig zu liegen kommt.

Auf jeden Fall führt die Bitumenbeschichtung zu einer deutlichen Stabilisierung und einem wesentlich verbesserten Schutz der verhältnismäßig dünnen Kunststoffolie, so daß Beschädigungen, die insbesondere während der Bauphase bei Bahnen mit ungeschützen diffusionsoffenen Kunststoffolien auftreten, bei der vorschlagsgemäßen Schalungs- und Unterspannbahn weitgehend verhindert werden können. Des weiteren bewirkt die Bitumenbeschichtung trotz ihrer dünnen Ausführung eine wesentliche Verbesserung der Beständigkeit der Schalungs- und Unterspannbahn gegen UV-Strahlung.

Ein weiterer Vorteil der Bitumenbeschichtung ergibt sich dadurch, daß diese eine wesentlich verbesserte Rutschfestigkeit auf der Beschichtungsseite der Schalungs- und Unterspannbahn zur Folge hat, so daß Unfällen bei der Erstellung von geneigten Dächern entgegengewirkt wird.

Außerdem kann die Bitumenbeschichtung selbstklebend ausgebildet sein, wodurch die Möglichkeit einer sehr einfachen Nahtverklebung benachbarter Bahnen in Überlappungsbereichen eröffnet wird.

Darüber hinaus führt die Bitumenbeschichtung zu einer optimalen Nagelschaftabdichtung beim Durchnageln der vorschlagsgemäßen Schalungs- und Unterspannbahn, da das außenseitige Bitumen aufgrund seiner guten Hafteigenschaften und einer gewissen Zähflüssigkeit zwischen einem die Bahn durchdringenden Nagel und dem angrenzenden Randbereich der Kunststoffolie hervorragend dichtet, so daß auch die durchnagelte Schalungs- und Unterspannbahn wasserdicht ist.

Als bevorzugte Ausgestaltung weist die Bitumenbeschichtung abwechselnd dünner und dicker beschichtete Bereiche auf, die insbesondere die Form paralleler Streifen haben. So wird eine bessere Stabilisierung der beschichteten Kunststoffolie erreicht. Weiter kann hierdurch die Rutschfestigkeit der Schalungs- und Unterspannbahn bei einer Verwendung auf geneigten Flächen wesentlich verbessert werden, indem die dicker beschichteten und dadurch erhabenen Bereiche quer zur Fallinie durch entsprechendes Verlegen der Bahn ausgerichtet werden.

Um die Wasserdampfdurchlässigkeit der Schalungs- und Unterspannbahn nicht übermäßig zu verringern, ist vorgesehen, daß maximal 50 % der Fläche der Bitumenbeschichtung dicker beschichtet ist.

Eine sehr rutschsichere Ausbildung der Schalungs- und Unterspannbahn wird vorzugsweise dadurch erhalten, daß die Bitumenschicht in den dicker beschichteten Bereichen eine Menge von 120 bis 400 g/m² Bitumen aufweist, so daß diese gegenüber den dünner beschichteten Bereichen deutlich hervorspringen bzw. erhaben sind.

Die Begehbarkeit der Schalungs- und Unterspannbahn kann alternativ oder ergänzend zu der teilweise dickeren Bitumenbeschichtung dadurch verbessert werden, daß die Bitumenschicht auf der der Kunststoffolie abgewandten Seite mit einem Kunststoff-Faservlies mit einem Flächengewicht von vorzugsweise 10 bis 50 g/m² abgedeckt ist. Dieses sowohl für Wasserdampf als auch für Wasser in flüssiger Form durchlässige Faservlies wird in die Bitumenschicht und, soweit vorhanden, insbesondere in die erhabenen, dicker beschichteten Bereiche dieser Schicht eingedrückt, wodurch eine sehr haltbare Verbindung mit der Schalungs- und Unterspannbahn erhalten wird.

Eine Ausführungsform zeichnet sich dadurch aus, daß zwischen der Kunststoffolie und der Bitumenbeschichtung ein Kunststoff-Faservlies mit einem Gewicht von vorzugsweise 10 bis 150 g/m² angeordnet ist. Dieses ebenfalls für Wasser sowohl im flüssigen als auch im gasförmigen Zustand durchlässige Kunststoff-Faservlies beeinträchtigt die Wasserdampfdurchlässigkeit der Schalungs- und Unterspannbahn nicht, sondern erhöht diese im Falle dicker beschichteter Bereiche dadurch, daß Diffusionskanäle in der diffusionsoffenen Kunststoffolie von dicker beschichteten Bereichen der Bitumenschicht nicht wasserdampfundurchlässig abgedeckt werden und Wasserdampf in der Vliesschicht von den dicker beschichteten Bereichen zu den dünner beschichteten Bereichen hin diffundieren kann.

Weiterhin kann auch die der Bitumenbeschichtung abgewandte Kunststoffolienseite mit einem Kunststoff-Faservlies mit einem Gewicht von vorzugsweise 10 bis 150 g/m² kaschiert sein. Dieses ebenfalls wasser- und wasserdampfdurchlässige Kunststoff-Faservlies dient einem rückseitigen Schutz der diffusionsoffenen Kunststoffolie und behindert ebenfalls die Wasserdampfdurchlässigkeit nicht.

Vorzugsweise ist jedes der unmittelbar auf der Kunststoffolie aufliegenden Kunststoff-Faservliese durch einen zumindest wasserdampfdurchlässigen Klebstoff mit der Folie verbunden, um eine haltbare Verbindung sicherzustellen und gleichzeitig die Wasserdampfdurchlässigkeit der Schalungs- und Unterspannbahn nicht zu beeinträchtigen.

In besonders bevorzugter Ausgestaltung ist vorgesehen, daß die Bitumenbeschichtung zumindest im Randbereich der Schalungs- und Unterspannbahn selbstklebende Eigenschaften aufweist und dieser selbstklebende Randbereich durch eine entfernbare silikonbeschichtete Abdeckschicht abgedeckt ist. So wird ermöglicht, benachbarte und in ihrem Randbereich überlappte Schalungs- und Unterspannbahnen selbstklebend miteinander zu verkleben und trotzdem die Nasserdampfdurchlässigkeit in diesem Verklebebereich zu erhalten, da auch dort die beschriebene, nur sehr dünne Bitumenbeschichtung vorgesehen ist. Dabei ist es bei einer Abdeckung der Bitumenschicht mittels eines herkömmlichen Kunststoff-Faservlieses vorteilhaft, wenn sich dieses nicht bis in den selbstklebenden Randstreifen erstreckt, sondern die bitumenbeschichtete Oberfläche mit Ausnahme des Randstreifens abdeckt. Dieser Randstreifen ist dann durch die entfernbare, silikonbeschichtete Abdeckschicht für die Lagerung und den Transport der Schalungs- und Unterspannbahn geschützt, wobei die Abdeckfolie zum Verlegen aufgrund ihrer Silikonbeschichtung problemlos von dem selbstklebenden Randstreifen abgezogen werden kann.

Jedoch ist je nach Anwendungsfall auch eine vollflächige Verklebung der Schalungs- und Unterspannbahn bei entsprechender Bitumenbeschichtung und entfernbarer Abdeckung möglich, wobei in Spezialfällen, wie beim Überdecken von Dichtungsfugen, auch eine vollflächige rückseitige Verklebung der Bahn in Betracht kommt.

Überraschenderweise hat sich herausgestellt, daß die sehr sparsame Bitumenbeschichtung grundsätzlich ausreicht, um derartige Klebeverbindungen zuverlässig herzustellen.

Jedoch erleichtern sich bis in den Verklebebereich erstrekkende, dicker beschichtete Bereiche der Bitumenbeschichtung die Herstellung von hochgradig wasserdichten und sehr belastbaren Klebeverbindungen. Bei einer bevorzugten Ausführungsform erstrecken sich die dünner und dicker beschichteten Bereiche bis in die Randbereiche, wobei die erhabenen Bereiche als mehrfach nebeneinanderliegende und randparallele Streifen ausgebildet sind, um eine besonders haltbare und wasserdichte Verklebung der Bahnen miteinander zu ermöglichen.

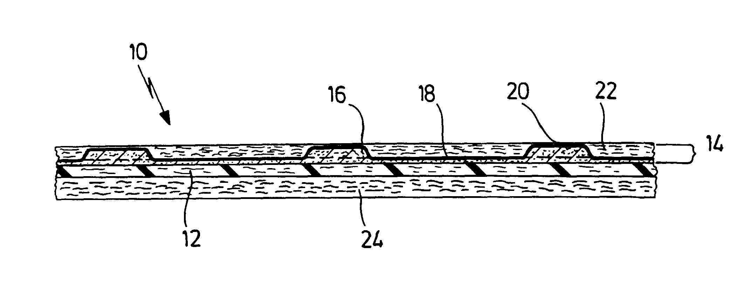

Die nachfolgende Beschreibung einer bevorzugten Ausführungsform dient im Zusammenhang mit der Zeichnung der näheren Erläuterung der Erfindung.

Die Zeichnung zeigt einen schematischen Querschnitt durch eine bevorzugte Ausführungsform einer diffusionsoffenen Schalungs- und Unterspannbahn.

Diese vorschlagsgemäße Schalungs- und Unterspannbahn 10 umfaßt eine diffusionsoffene Kunststoffolie 12 aus einem hydrophilem Kunststoff, der beim Darstellungsbeispiel Polyether-Block-Amid (PEBA) ist. Diese wasserdichte Kunststoffolie 12 hat bei einer Dicke von 10 bis 40 µm eine derart hohe Wasserdampfdurchlässigkeit, daß sich eine diffusionsäquivalente Luftschichtdicke s_{d} von weniger als 0,3 m ergibt. Diese hohe Wasserdampfdurchlässigkeit wird durch den hydrophilen Charakter der Folie 12 bei verhältnismäßig geringer Dicke ermöglicht, da vereinzelte Wassermoleküle, wie sie bei Wasserdampf vorliegen, von der Kunststoffolie 12 aufgenommen und durch diese hindurch diffundieren können.

Die Kunststoffolie 12 weist beim Darstellungsbeispiel eine einseitige Beschichtung 14 aus Bitumen 16 mit dünner beschichteten Bereichen 18 und dicker beschichteten Bereichen 20 auf. Hierbei ist das Bitumen 16 in den dünner beschichteten Bereichen 18 in einer Menge von 15 bis 70 g/m² auf die Kunststoffolie 12 aufgetragen, und die weniger als 50 % der Fläche der Beschichtung 14 einnehmenden, dicker beschichteten und dadurch erhabenen Bereiche 20 ergeben sich durch Beschichtungsmengen von 120 bis 400 g/m² und bilden parallele Streifen. Es ist jedoch auch möglich, die Kunststoffolie 12 über die gesamte Fläche gleichmäßig dünn und/oder beidseitig mit Bitumen 16 zu beschichten.

Das verwendete Bitumen 16 kann herkömmliches Oxidationsbitumen mit oder ohne Füllstoff oder übliches SBS- oder APP-modifiziertes Bitumen mit oder ohne Füllstoff sein.

Dadurch daß das Bitumen 16 im wesentlichen nur mit der außerordentlich geringen Menge von 15 bis 70 g/m² auf die Kunststoffolie 12 aufgebracht ist, wird die Wasserdampfdurchlässigkeit der Kunststoffolie 12, zumindest von innen nach außen, nur unbeträchtlich verringert, jedoch wird die Wasserdichtigkeit der erhaltenen Schalungs- und Unterspannbahn 10 vor allem bei außenseitig auf die Bitumenbeschichtung auftreffendem Wasser erheblich verbessert, da das Bitumen 16 hochgradig wasserabstoßend ist. So wird im Idealfall eine nur unidirektional von innen nach außen und nur für Wasserdampf durchlässige Schalungs- und Unterspannbahn 10 erhalten.

Auf der der Kunststoffolie 12 abgewandten Seite der Beschichtung 14 ist auf das Bitumen 16 ein dünnes, herkömmliches Kunststoff-Faservlies 22 aufgelegt, dessen Flächengewicht zwischen 10 und 50 g/m² beträgt und welches zumindest in die dicker beschichteten Bereiche 20 der Bitumenbeschichtung 14 teilweise oder ganz eingebettet ist, sich aber auch mit den dünner beschichteten Bereichen 18 verbinden kann. Der Zeichnung ist zu entnehmen, daß das Vlies 22 mit seiner außenseitigen Oberfläche etwa mit den erhabenen Bereichen 20 auf einem Niveau liegt bzw. diese etwas überragt. Beim Betreten der Schalungs- und Unterspannbahn 10 wird das Vlies 22 zusammengedrückt, so daß dann die dicker beschichteten, wulstartigen Bereiche 20 einen guten Halt geben können.

Das Vlies 22 wirkt als mechanische Schutzschicht und stabilisiert die bereichsweise unterschiedlich starke Bitumenbeschichtung 14, ohne die Wasserdampfdurchlässigkeit der gesamten Schalungs- und Unterspannbahn 10 merklich zu verringern, da das Vlies 22 sowohl wasser- als auch wasserdampfdurchlässig ist.

Auf der der Bitumenbeschichtung 14 abgewandten Seite ist die Kunststoffolie 12 beim Darstellungsbeispiel zusätzlich mit einem Kunststoff-Faservlies 24 mit einem Flächengewicht von 10 bis 150 g/m² abgedeckt, das mit der Folie 12 durch einen nicht dargestellten, zumindest für Wasserdampf und gegebenenfalls auch für Wasser in flüssiger Form durchlässigen Klebstoff weitgehend vollflächig verbunden ist. Auch das Vlies 24 ist sowohl wasser- als auch wasserdampfdurchlässig, so daß die Wasserdampfdurchlässigkeit der Kunststoffolie 12 nicht merklich beeinträchtigt wird. Das Vlies 24 dient einem rückseitigen Schutz der Kunststoffolie 12.

Es besteht auch die Möglichkeit, ein dem Vlies 24 entsprechendes Faservlies auf der anderen Seite der Kunststoffolie 12 zwischen dieser und der Bitumenbeschichtung 14, die dann auf dieses Faservlies aufgebracht ist, anzuordnen.

Die vorschlagsgemäße Schalungs- und Dichtungsbahn 10 wird generell so verlegt, daß die Bitumenbeschichtung 14 außenseitig bezüglich eines Bauwerks zu liegen kommt. Beispielsweise wird die Bahn 10 auf Dachsparren oder eine Holzschalung aufgenagelt, wobei das der Schalung zugewandte Kunststoff-Faservlies 24 Beschädigungen der Kunststoffolie 12, die beispielsweise durch aus der Schalung hervorstehende Spreisel hervorgerufen werden könnten, verhindert. Die außenseitige Bitumenbeschichtung 14 ermöglicht eine weitgehend rutschsichere Begehbarkeit der Bahn 10 selbst bei großen Neigungen, wobei diese Begehbarkeit wesentlich durch die Rippenstruktur der erhabenen Bereiche 20 und das sich fest mit der Bitumenbeschichtung 14 verbindende Kunststoff-Faservlies 22 mit seiner relativ rauhen, offenen Oberfläche verbessert wird.

Die Bitumenbeschichtung 14 schützt die Kunststoffolie 12 wirksam vor Beschädigungen durch mechanische Belastungen, wenn die Bahn 10 beispielsweise mit einer Dachlattung überdeckt und diese durch die Bahn 10 hindurch festgenagelt wird. Das Bitumen 16 sorgt beim Durchnageln der vorschlagsgemäßen Schalungs- und Unterspannbahn 10 für eine hervorragende Nagelschaftdichtigkeit, so daß eine hochgradig wasserdichte Dachhaut oder Zwischenschicht einer Fassade mit Hilfe der Bahn 10 gebildet werden kann.

## Patentansprüche

1. Diffusionsoffene Schalungs- und Unterspannbahn (10) mit einer weitgehend wasserdichten, diffusionsoffenen Kunststoffolie (12) aus hydrophilem Kunststoff,
**dadurch gekennzeichnet,**
daß die Kunststoffolie (12) auf einer Seite mit Bitumen (16) in einer Menge von 15 bis 70 g/m² beschichtet ist.

2. Schalungs- und Unterspannbahn nach Anspruch 1, dadurch gekennzeichnet, daß die Kunststoffolie (12) aus Polyether-Block-Amid, Polyether-Block-Ester oder Polyurethan hergestellt ist.

3. Schalungs- und Unterspannbahn nach Anspruch 1 oder 2, dadurch gekennzeichnet, daß die Kunststoffolie (12) eine Dicke von 10 bis 40 µm und eine Wasserdampfdurchlässigkeit, die einer diffusionsäquivalenten Luftschichtdicke (s_{d}) von weniger als 0,3 m entspricht, aufweist.

4. Schalungs- und Unterspannbahn nach einem der voranstehenden Ansprüche, dadurch gekennzeichnet, daß die Bitumenbeschichtung (14) abwechselnd dünner und dicker beschichtete Bereiche (18, 20) aufweist.

5. Schalungs- und Unterspannbahn nach Anspruch 4, dadurch gekennzeichnet, daß die abwechselnden Bereiche (18, 20) die Form paralleler Streifen aufweisen.

6. Schalungs- und Unterspannbahn nach Anspruch 4 oder 5, dadurch gekennzeichnet, daß maximal 50% der Fläche der Bitumenbeschichtung (14) dicker beschichtete Bereiche (20) aufweist.

7. Schalungs- und Unterspannbahn nach einem der Ansprüche 4 bis 6, dadurch gekennzeichnet, daß die Bitumenbeschichtung (14) in den dicker beschichteten Bereichen (20) eine Menge von 120 bis 400 g/m² Bitumen (16) aufweist.

8. Schalungs- und Unterspannbahn nach einem der voranstehenden Ansprüche, dadurch gekennzeichnet, daß die Bitumenbeschichtung (14) auf der der Kunststoffolie (12) abgewandten Seite mit einem Kunststoff-Faservlies (22) mit einem Flächengewicht von 10 bis 50 g/m² abgedeckt ist.

9. Schalungs- und Unterspannbahn nach einem der voranstehenden Ansprüche, dadurch gekennzeichnet, daß zwischen der Kunststoffolie (12) und der Bitumenbeschichtung (14) ein Kunststoff-Faservlies mit einem Gewicht von 10 bis 150 g/m² angeordnet ist.

10. Schalungs- und Unterspannbahn nach einem der voranstehenden Ansprüche, dadurch gekennzeichnet, daß die der Bitumenbeschichtung (14) abgewandte Kunststoffolienseite mit einem Kunststoff-Faservlies (24) mit einem Gewicht von 10 bis 150 g/m² kaschiert ist.

11. Schalungs- und Unterspannbahn nach Anspruch 9 oder 10, dadurch gekennzeichnet, daß das Kunststoff-Faservlies (24) mit der Kunststoffolie (12) durch einen zumindest wasserdampfdurchlässigen Klebstoff verbunden ist.

12. Schalungs- und Unterspannbahn nach einem der voranstehenden Ansprüche, dadurch gekennzeichnet, daß die Bitumenbeschichtung (14) zumindest im Randbereich der Schalungs- und Unterspannbahn selbstklebende Eigenschaften aufweist und dieser selbstklebende Randbereich durch eine entfernbare, silikonbeschichtete Abdeckschicht abgedeckt ist.

## Claims

1. A diffusion-permeable shuttering and roofing sheet (10) with a substantially watertight, diffusion-permeable plastics film (12) of hydrophilic plastic, **characterized in that** the plastics film (12) is coated on one side with bitumen (16) in a quantity of from 15 to 70 g/m².

2. A shuttering and roofing sheet according to Claim 1, **characterized in that** the plastics film (12) is produced from polyether block amide, polyether block ester or polyurethane.

3. A shuttering and roofing sheet according to Claim 1 or 2, **characterized in that** the plastics film (12) has a thickness of from 10 to 40 µm and a water-vapour permeability corresponding to a diffusion-equivalent air-space thickness (**s**_{**d**}) of less than 0·3 m.

4. A shuttering and roofing sheet according to one of the preceding Claims, **characterized in that** the bitumen layer (14) has areas (18, 20) coated more thinly and more thickly in an alternating manner.

5. A shuttering and roofing sheet according to Claim 4, **characterized in that** the alternating areas (18, 20) are in the form of parallel strips.

6. A shuttering and roofing sheet according to Claim 4 or 5, **characterized in that** a maximum of 50% of the area of the bitumen coating (14) has areas (20) coated more thickly.

7. A shuttering and roofing sheet according to one of Claims 4 to 6, **characterized in that** the bitumen coating (14) in the areas (20) coated more thickly has a quantity of from 120 to 400 g/m² of bitumen (16).

8. A shuttering and roofing sheet according to one of the preceding Claims, **characterized in that** the bitumen layer (14) is covered on the side remote from the plastics film (12) with a plastic fleece (22) with a weight per unit area of from 10 to 50 g/m².

9. A shuttering and roofing sheet according to one of the preceding Claims, **characterized in that** a plastic fibre fleece with a weight of from 10 to 150 g/m² is arranged between the plastics film (12) and the bitumen coating (14).

10. A shuttering and roofing sheet according to one of the preceding Claims, **characterized in that** the side of the plastics film remote from the bitumen coating (14) is lined with a plastic fibre fleece (24) with a weight of from 10 to 150 g/m².

11. A shuttering and roofing sheet according to Claim 9 or 10, **characterized in that** the plastic fibre fleece (24) is joined to the plastics film (12) by an adhesive permeable at least by water-vapour.

12. A shuttering and roofing sheet according to one of the preceding Claims, **characterized in that** the bitumen coating (14) has self-adhesive properties at least in the edge area of the shuttering and roofing sheet, and the said self-adhesive edge area is covered by a removable silicone-coated covering layer.

## Revendications

1. Panneau de coffrage et de serrage inférieur ouvert à la diffusion (10) présentant une feuille en matière plastique largement étanche à l'eau, ouverte à la diffusion (12), constituée d'une matière plastique hydrophile, caractérisé en ce que la feuille en matière plastique (12) est revêtue sur un côté avec du bitume (16) dans une quantité de 15 à 70 g/m².

2. Panneau de coffrage et de serrage inférieur selon la revendication 1, caractérisé en ce que la feuille en matière plastique (12) est préparée à partir de polyéther-séquence-amide, de polyéther-séquence-ester ou de polyuréthane.

3. Panneau de coffrage et de serrage inférieur selon la revendication 1 ou 2, caractérisé en ce que la feuille en matière plastique (12) présente une épaisseur de 10 à 40 µm et une perméabilité à la vapeur d'eau qui correspond à une épaisseur de couche d'air (s_{d}) équivalente à la diffusion inférieure à 0,3 m.

4. Panneau de coffrage et de serrage inférieur selon l'une quelconque des revendications précédentes, caractérisé en ce que le revêtement de bitume (14) présente alternativement des domaines revêtus de manière plus mince et de manière plus épaisse (18, 20).

5. Panneau de coffrage et de serrage inférieur selon la revendication 4, caractérisé en ce que les domaines alternés (18, 20) présentent la forme de bandes parallèles.

6. Panneau de coffrage et de serrage inférieur selon la revendication 4 ou 5, caractérisé en ce que 50% au maximum de la surface du revêtement de bitume (14) présentent des domaines revêtus de manière plus épaisse (20).

7. Panneau de coffrage et de serrage inférieur selon l'une quelconque des revendications 4 à 6, caractérisé en ce que le revêtement de bitume (14) présente dans les domaines revêtus de manière plus épaisse (20) une quantité de 120 à 400 g/m² de bitume (16).

8. Panneau de coffrage et de serrage inférieur selon l'une quelconque des revendications précédentes, caractérisé en ce que le revêtement de bitume (14) est recouvert sur le côté opposé à la feuille en matière plastique (12) avec un non-tissé de fibres synthétiques (22) avec un poids par unité de surface de 10 à 50 g/m².

9. Panneau de coffrage et de serrage inférieur selon l'une quelconque des revendications précédentes, caractérisé en ce qu'est disposé un non-tissé de fibres synthétiques entre la feuille en matière plastique (12) et le revêtement de bitume (14) avec un poids de 10 à 150 g/m².

10. Panneau de coffrage et de serrage inférieur selon l'une quelconque des revendications précédentes, caractérisé en ce que le côté de la feuille en matière plastique opposé au revêtement de bitume (14) est stratifié avec un non-tissé de fibres synthétiques (24) présentant un poids de 10 à 150 g/m².

11. Panneau de coffrage et de serrage inférieur selon la revendication 9 ou 10, caractérisé en ce que le non-tissé de fibres synthétiques (24) est lié à la feuille en matière plastique (12) par une colle au moins perméable à la vapeur d'eau.

12. Panneau de coffrage et de serrage inférieur selon l'une quelconque des revendications précédentes, caractérisé en ce que le revêtement de bitume (14) présente au moins dans le domaine de bord du panneau de coffrage et de serrage inférieur des caractéristiques autocollantes et ce domaine de bord autocollant est recouvert par une couche de couverture revêtue de silicone pouvant être enlevée.
